# EUROPÄISCHE PATENTSCHRIFT

(11) **EP 2 839 190 B1**
(45) Veröffentlichungstag und Bekanntmachung des Hinweises auf die Patenterteilung: **17.02.2016**
(21) Anmeldenummer: 13709869.5
(22) Anmeldetag: 12.03.2013
(51) Int. Cl.: F16H 59/10, G01D 5/34, G01D 5/347

(54) **SCHALTHEBELVORRICHTUNG ZUR BETÄTIGUNG EINES FAHRZEUGGETRIEBES**
SHIFT LEVER DEVICE FOR ACTUATING A VEHICLE GEARBOX
DISPOSITIF À LEVIER DE CHANGEMENT DE VITESSE DESTINÉ À ACTIONNER UNE TRANSMISSION DE VÉHICULE

(30) Priorität: 19.04.2012 DE 102012206417
(43) Veröffentlichungstag der Anmeldung: 25.02.2015
(73) Patentinhaber: ZF Friedrichshafen AG, 88046 Friedrichshafen (DE)
(72) Erfinder: HARTRAMPF, Ralf, 49419 Wagenfeld (DE); GIEFER, Andreas, 49448 Lemfoerde (DE); RAKE, Ludger, 49439 Steinfeld (DE)
(74) Vertreter: Morgenthum-Neurode, Mirko
(86) Internationale Anmeldenummer: PCT/EP2013/054938
(87) Internationale Veröffentlichungsnummer: WO 2013/156210

(56) Entgegenhaltungen:
- DE-A1- 4 309 049
- DE-A1- 4 332 748
- DE-C1- 4 038 998
- JP-A- 2007 118 699
- US-A- 4 672 214
- US-A- 4 731 530
- US-A1- 2003 193 016

## Beschreibung

Die Erfindung betrifft eine Schalthebelvorrichtung zur Betätigung eines Fahrzeuggetriebes, mit einer Halterung, einem bewegbar an der Halterung gelagerten und in vorgegebene Schalthebelstellungen stellbaren Schalthebel und einer optischen Schalthebelstellungserfassungseinrichtung, die einen Träger, mehrere an dem Träger vorgesehene optische Sensoren, ein optisches Umlenkelement, wenigstens eine an dem Träger vorgesehene selbstleuchtende Lichtquelle, mittels welcher Licht über das Umlenkelement an die Sensoren abgebbar ist, und ein in den Strahlengang des Lichts angeordnetes und mit einer optischen Codierung versehenes Codierelement aufweist, welches durch Bewegen des Schalthebels in vorgegebene Codierstellungen bewegbar ist.

Häufig werden zur Erfassung von Schalthebelstellungen magnetische Positionssensoren verwendet. Diese weisen jedoch den Nachteil auf, dass aufgrund weicher Magnetfeldübergänge nur geringe Auflösungen erzielbar sind. Ferner werden Magnete aus seltenen Erden hergestellt, die zunehmend im Preis steigen. Daher besteht der Wunsch, magnetische Positionssensoren durch andere Sensoren ersetzen zu können.

Eine Schalthebelvorrichtung der eingangs genannten Art verwendet optische Positionssensoren und ist z.B. aus der DE 197 48 131 C2 bekannt. Die Schalthebelstellungserfassungseinrichtung dieser Schalthebelvorrichtung weist als Umlenkelement einen Spiegel auf, der im Abstand zu dem Träger an der Halterung befestigt ist. Somit ist diese Schalthebelstellungserfassungseinrichtung nicht vormontierbar, da der Spiegel im Abstand zu dem Träger an der Halterung befestigt ist. Ein Testen der Schalthebelstellungserfassungseinrichtung vor der Montage der Schalthebelvorrichtung ist daher nicht möglich. Ferner sind der Spiegel und der Träger unter Berücksichtigung des Strahlengangs des Lichts relativ zueinander auszurichten, sodass während der Montage der Schalthebelvorrichtung Justieraufwand für den Spiegel und/oder den Träger anfällt, der sich bei einer vormontierten Schalthebelstellungserfassungseinrichtung vermeiden oder zumindest reduzieren ließe. Auch wird das Licht erst codiert, danach reflektiert und dann dem Flächensensor zugeführt. Der größte Teil des Strahlengangs wird somit durch das codierte Lichtsignal gebildet. Dies kann aber zu einer erhöhten Unschärfe der Positionsinformation führen, die von dem codierten Licht getragen wird, beispielsweise weil der Lichtstrahl auseinanderläuft.

Das Dokument DE 43 09 049 offenbart ein optisches Schaltelement für eine als Lenkstockschalter ausgebildete Schalteranordnung, welche zum Schalten von Blinker und Wischanlage vorgesehen ist. Das optische Schaltelement umfasst einen Träger mit einer Lichtquelle und einem optischen Sensor, zwischen welchen ein Lichtleitkörper mit einer Aussparung angeordnet ist. Der Lichtleitkörper lenkt das Licht von der Lichtquelle über die Aussparung zu dem optischen Sensor. In die Aussparung ist ein Codierelement mit vordefinierten Durchlässen einbringbar und bewegbar, wobei das Licht in definierten Positionen des Codierelementes durch die Durchlässe durchgelassen wird, um den optischen Sensor zu beaufschlagen. Der Lichtleitkörper ist auf der Lichtquelle und dem optischen Sensor gelagert.

Das Dokument JP 2007-118699 offenbart eine Schalthebelvorrichtung nach dem Oberbegriff des Patentanspruchs 1.

Ausgehend hiervon liegt der Erfindung die Aufgabe zugrunde, die Schalthebelvorrichtung der eingangs genannten Art derart weiterzubilden, dass der Abstand zwischen dem Codierelement und den Sensoren möglichst kurz gehalten werden kann. Ferner soll die Schalthebelstellungserfassungseinrichtung möglichst einfach montierbar sein. Vorzugsweise soll die Schalthebelstellungserfassungseinrichtung vormontiert werden können.

Diese Aufgabe wird durch eine Schalthebelvorrichtung nach Anspruch 1 gelöst. Bevorzugte Weiterbildungen der Schalthebelvorrichtung sind in den Unteransprüchen und in der nachfolgenden Beschreibung gegeben.

Die Schalthebelvorrichtung zur Betätigung eines Fahrzeuggetriebes umfasst eine Halterung, einen bewegbar an der Halterung gelagerten und in vorgegebene Schalthebelstellungen stellbaren Schalthebel und eine optische Schalthebelstellungserfassungseinrichtung, die einen Träger, mehrere an dem Träger vorgesehene optische Sensoren, ein optisches Umlenkelement, wenigstens eine an dem Träger vorgesehene selbstleuchtende Lichtquelle, mittels welcher Licht über das Umlenkelement an die Sensoren abgebbar ist, und ein in den Strahlengang des Lichts angeordnetes und mit einer optischen Codierung versehenes Codierelement aufweist, welches durch Bewegen des Schalthebels in vorgegebene Codierstellungen bewegbar ist, wobei das Codierelement zwischen den Sensoren und dem an dem Träger vorgesehenen und als Lichtleitkörper ausgebildeten Umlenkelement angeordnet ist.

Da das Codierelement zwischen dem Umlenkelement und den Sensoren angeordnet ist, kann der Weg des codierten Lichts am Gesamtstrahlengang relativ kurz gehalten werden. Da ferner das Umlenkelement als Lichtleitkörper ausgebildet ist, lässt sich die Schalthebelstellungserfassungseinrichtung einfach montieren. Insbesondere ist der Aufwand für die Justierung optischer Komponenten reduzierbar, da der Verlauf des Strahlengangs im Wesentlichen durch den Lichtleitkörper vorgebbar ist. Das Aneinander-Ausrichten von Lichtquelle, Umlenkelement und Sensoren lässt sich somit vermeiden oder zumindest deutlich reduzieren. Auch ermöglich der Lichtleitkörper eine besonders kompakte und stabile Ausgestaltung der Schalthebelstellungserfassungseinrichtung. Beispielsweise bildet der Lichtleitkörper gleichzeitig eine Versteifung und/oder einen Teil eines Gehäuses der Schalthebelstellungserfassungseinrichtung. Schließlich ist das Umlenkelement an dem Träger vorgesehen, sodass die Schalthebelstellungserfassungseinrichtung vormontiert werden kann.

Das Codierelement ist bevorzugt mit dem Schalthebel bewegbar, insbesondere relativ zu der Halterung und/oder zu dem Träger und/oder zu den Sensoren. Beispielsweise ist das Codierelement mit dem Schalthebel unter Zwischenschaltung eines Koppelglieds bewegbar, welches vorzugsweise sowohl mit dem Codierelement als auch mit dem Schalthebel mechanisch gekoppelt ist. Gemäß einer Ausgestaltung ist das Codierelement bewegbar, insbesondere verschiebbar, vorteilhaft linear verschiebbar, an dem Lichtleitkörper gelagert. Diese Ausgestaltung ist besonders kompakt, kostengünstig und einfach aufbaubar.

Gemäß einer Weiterbildung weist der Lichtleitkörper eine Lichtaustrittsfläche und wenigstens eine Lichteintrittsfläche auf, durch welche hindurch die selbstleuchtende Lichtquelle Licht in den Lichtleitkörper einleitet, der das eingeleitete Licht umleitet und durch die Lichtaustrittsfläche in Richtung auf die Sensoren und/oder auf das Codierelement abgibt, welches zwischen der Lichtaustrittsfläche und den Sensoren angeordnet ist. Die Lichtaustrittsfläche ist bevorzugt eben oder im Wesentlichen eben ausgebildet. Insbesondere verläuft die Lichtaustrittsfläche parallel oder im Wesentlichen parallel zum Träger und/oder zu dem Codierelement und/oder zu den Sensoren. Dadurch kann entlang einer Anordnungsrichtung von Träger über Sensoren und Codierelement zu der Lichtaustrittsfläche des Lichtleitkörpers eine kompakte Ausgestaltung der optischen Schalthebelstellungserfassungseinrichtung erreicht werden. Im Sinne der vorliegenden Erfindung korrespondiert ein relativer Verlauf von wenigstens zwei Flächen/Bauteilen zueinander zu einem entsprechenden relativen Verlauf der diese Flächen/Bauteile jeweils umfassenden Ebenen.

Die Lichteintrittsfläche kann vorzugsweise eben oder gewölbt, beispielsweise konvex, ausgebildet sein. Die Lichteintrittsfläche verläuft vorzugsweise parallel oder im Wesentlichen parallel zu der Lichtaustrittsfläche. Mit anderen Worten weist der Lichtleitkörper vorzugsweise wenigstens zwei in eine gleiche Richtung zeigende unterschiedliche Flächen auf, wobei die eine Fläche eine Lichteintrittsfläche und die andere der wenigstens zwei unterschiedlichen Flächen die Lichtaustrittsfläche ausformen. Die Sensoren und die Lichtquelle sind hierbei insbesondere auf derselben Seite des Codierelements angeordnet, wobei die Lichteintrittsfläche unmittelbar an die Lichtquelle angrenzen oder im Abstand zu dieser angeordnet sein kann.

In einer dazu alternativen bevorzugten Weiterbildung verläuft die Lichteintrittsfläche schräg zu der Lichtaustrittsfläche. Weiter bevorzugt ist der Lichtleitkörper derart ausgeformt, dass die Lichteintrittsfläche senkrecht zu der Lichtaustrittsfläche verläuft. Ferner kann die Lichteintrittsfläche unmittelbar an die Lichtquelle angrenzen oder im Abstand zu dieser angeordnet sein. Die Lichtquelle kann hierbei insbesondere seitlich des Lichtleitkörpers angeordnet werden, wobei eine Seitenfläche des Lichtleitkörpers teilweise oder vollständig die Lichteintrittsfläche ausformen kann. Hierbei sind insbesondere die Sensoren und wenigstens ein elektrischer Anschluss der Lichtquelle auf derselben Seite des Codierelements angeordnet.

Die Lichtquelle kann im Allgemeinen vorzugsweise derart angeordnet und/oder ausgebildet sein, dass ein lichtaussendender Bereich der Lichtquelle die Lichteintrittsfläche vollständig überdeckt. Der lichtaussendende Bereich der Lichtquelle und die Lichteintrittsfläche können vorzugsweise eine identische Größe aufweisen, damit ein von der Lichtquelle ausgesandter Lichtanteil unter Berücksichtigung einer kompakten Ausgestaltung vollständig in den Lichtleitkörper eintreten kann.

Mittels der vorbeschriebenen Anordnung der Sensoren und der Lichtquelle bzw. des elektrischen Anschlusses der Lichtquelle kann die elektrische Beschaltung der Schalthebelstellungserfassungseinrichtung vereinfacht werden. Insbesondere ist der Träger als Leiterplatte ausgebildet. Somit können die Sensoren und die Lichtquelle über die Leiterplatte kontaktiert werden. Dabei können die Sensoren und die Lichtquelle auf einer dem Codierelement zugwandten Seite des Träger angeordnet sein. Alternativ können die Sensoren auf der dem Codierelement abgewandten Seite des Trägers angeordnet sein, wobei der Träger wenigstens in dem Bereich der Sensoranordnung transparent bzw. für das von der Lichtquelle ausgesandte Licht lichtdurchlässig ist. Bevorzugt ist der Träger eben oder im Wesentlichen eben ausgebildet. Vorteilhaft leitet der Lichtleitkörper das Licht, vorzugsweise seitlich, um das Codierelement herum.

Gemäß der vorliegenden Erfindung umfasst der Lichtleitkörper einen zu dem Träger hin offenen Innenraum, der von dem Träger abgedeckt ist, wobei das Codierelement und die Sensoren in dem Innenraum angeordnet sind. Der Innenraum ist insbesondere ein Hohlraum. Dadurch begrenzt wenigstens der Lichtleitkörper zusammen mit dem Träger den Innenraum. Insbesondere bildet der Lichtleitkörper zusammen mit dem Träger und den Lichtquellen einen im Wesentlichen geschlossenen Kasten, in dessen Innenraum wenigstens das Codierelement und die Sensoren angeordnet sind. Somit ist ein besonders kompakter Aufbau der Schalthebelstellungserfassungseinrichtung erzielbar. Beispielsweise kann der Kasten bis auf eine oder wenige Durchführungen vollständig geschlossen sein. Bevorzugt umfasst der Kasten wenigstens eine Durchführung, durch welche sich das Codierelement und/oder das Koppelglied hindurch erstreckt.

Gemäß einer Weiterbildung ist das Codierelement relativ zu den Sensoren entlang einer oder entlang wenigstens einer Geraden in die oder in mehrere der Codierstellungen bewegbar. Beispielsweise ist das Codierelement geradlinig und/oder in einer Ebene bewegbar. Bevorzugt besitzt das Codierelement einen, zwei oder drei translatorische Freiheitsgrade. Umfasst die Schalthebelvorrichtung lediglich eine Schaltgasse, so ist das Codierelement bevorzugt entlang einer Geraden bewegbar. In diesem Fall besitzt das Codierelement beispielsweise genau einen oder wenigstens einen translatorischen Freiheitsgrad. Umfasst die Schalthebelvorrichtung mehrere Schaltgassen, die über eine Wählgasse miteinander verbunden sind, so ist das Codierelement bevorzugt in einer Ebene bewegbar. In diesem Fall besitzt das Codierelement beispielsweise genau zwei oder wenigstens zwei translatorische Freiheitsgrade. Dies ist beispielsweise mittels eines üblichen Schieber-in-Schieber-Systems realisierbar, wobei ein Schieber eine Bewegung in eine Richtung und der andere Schieber eine Bewegung quer dazu ermöglicht.

Der Lichtleitkörper besteht bevorzugt aus Kunststoff. Insbesondere handelt es sich bei dem Lichtleitkörper um ein Gussteil, vorteilhaft um ein Spritzgussteil. Somit kann der Lichtleitkörper als Massenprodukt besonders kostengünstig hergestellt werden. Ferner ist es möglich, Lagerstätten für das Codierelement an dem Lichtleitkörper vorzusehen und/oder an diesen anzuspritzen und/oder integriert mit diesem auszubilden. Es ist aber auch möglich, den Lichtleitkörper aus Glas oder aus einem anderen lichtleitenden Material herzustellen. Weiter bevorzugt ist der Lichtleitkörper dergestalt, dass nur die Lichteintrittsfläche bzw. Lichteintrittsflächen und die Lichtaustrittsfläche bzw. Lichtaustrittsflächen lichtdurchlässig und die übrigen Lichtleitkörperflächen lichtundurchlässig sind. Damit können die über wenigstens eine Lichteintrittsfläche eintretenden Lichtstrahlen der Lichtquelle in dem Lichtleitkörper zu der Lichtaustrittsfläche mit möglichst geringem Reflexions- und Lichtintensitätsverlust geleitet werden. Dazu können die übrigen Lichtleitkörperflächen beispielsweise mittels Bearbeitung wie Schleifen oder Beschichtung jeweils eine Reflexionsschicht ausformen, welche eine Lichtleitung der von der Lichtquelle ausgesandten Lichtstrahlen in dem Lichtleitkörper derart bewirken, dass die Lichtstrahlen nach Eintritt über die Lichteintrittsfläche zuverlässig zu der Lichtaustrittsfläche des Lichtleitkörpers geleitet werden. Alternativ oder zusätzlich können benachbart zu den übrigen Lichtleitkörperflächen lichtundurchlässige bzw. lichtreflektierende Wandungen von an den Lichtleitkörper angrenzend vorsehbaren Bauelementen angeordnet sein bzw. solche Wandungen unmittelbar an den übrigen Lichtleitkörperflächen anliegen, um die Reflexion der Lichtstrahlen innerhalb des Lichtleitkörpers zu bewirken. Auch können ein oder mehrere Eckbereiche des Lichtleitkörpers angefast bzw. abgeschrägt sein, um die Lichtstrahlen zuverlässig innerhalb des Lichtleitkörpers zu der Lichtaustrittsfläche leiten zu können. Diese bevorzugte Weiterbildung ist insbesondere bei einer vorbeschriebenen Ausgestaltung des Lichtleitkörpers vorteilhaft, bei welcher die Lichteintrittsfläche und die Lichtaustrittsfläche des Lichtleitkörpers in eine annähernd gleiche oder identische Richtung weisen. Der angefaste bzw. abgeschrägte Eckbereich ist dabei vorzugsweise gegenüber der Lichteintrittsfläche in einem Bereich zwischen der Lichteintrittsfläche und der Lichtaustrittsfläche derart vorzusehen, dass die über die Lichteintrittsfläche eintretenden Lichtstrahlen zuverlässig in Richtung der Lichtaustrittsfläche geleitet werden können.

Die selbstleuchtende Lichtquelle ist oder umfasst bevorzugt eine oder wenigstens eine Leuchtdiode. Das Licht ist vorzugsweise Infrarotlicht. Bei der selbstleuchtenden Lichtquelle handelt es sich somit vorteilhaft um eine Infrarotlichtquelle. Weiter bevorzugt ist die selbstleuchtende Lichtquelle getaktet ansteuerbar. Dadurch werden Lichtstrahlen bzw. wird das Licht nicht durchgängig, sondern der Taktung entsprechend von der selbstleuchtenden Lichtquelle bzw. der Leuchtdiode abgestrahlt. Dieser Effekt kann vorteilhaft zur Fehlerdiagnose wenigstens einer der Sensoren verwendet werden, da der wenigstens eine Sensor ein der Taktung entsprechendes Zustandssignal abgibt. Im Besonderen ist damit ein Ausfall bzw. ein Defekt wenigstens eines Sensors diagnostizierbar. Eine Differenzbildung aus unterschiedlichen Zustandssignalen erlaubt eine Bestimmung, ob der Sensor aktiviert oder deaktiviert ist. Mittels der Differenzbildung kann ein Dunkelstromanteil der Sensoren berücksichtigt werden. Ferner kann eine mittels der Sensoren erfolgende elektrische Sensierung in Abhängigkeit von einem Zustand der selbstleuchtenden Lichtquelle erfolgen.

Bevorzugt ist durch Bewegen des Schalthebels das Codierelement relativ zu den Sensoren in die unterschiedlichen Codierstellungen bewegbar. Insbesondere ist den Codierstellungen jeweils eine der Schalthebelstellungen zugeordnet. Bevorzugt ist die an dem Codierelement vorgesehene Codierung in den unterschiedlichen Codierstellungen unterschiedlich. Vorteilhaft weist die Codierung zwischen zwei benachbarten der Codierstellungen eine Hamming-Distanz von zwei, drei, vier oder wenigstens vier auf. Zwar sind Hamming-Distanzen von zwei oder drei prinzipiell möglich, aufgrund der an Fahrzeuge gestellten Sicherheitsanforderungen beträgt die Hamming-Distanzen aber vorzugsweise vier oder wenigstens vier.

Gemäß einer Weiterbildung umfasst die optische Codierung einen oder mehrere lichtdurchlässige Bereiche und einen oder mehrere lichtundurchlässige Bereiche. Insbesondere können die Bereiche jeweils in wenigstens einer der Codierstellungen mit zumindest einem der Sensoren zur Überdeckung gebracht werden. Bei den Bereichen handelt es sich vorteilhaft um Bereiche des Codierelements.

Das Codierelement umfasst beispielsweise einen bedruckten Körper, einen Körper mit gelaserter Oberfläche oder einen geätzten Körper. Somit sind Auflösungen von bis zu 100µm möglich. Der Körper ist beispielsweise eine Folie, eine Platte oder eine Scheibe. Ist der Körper eine Folie, so ist diese bevorzugt an einem Trägerkörper befestigt, beispielsweise auf diesem aufgebracht oder in diesem eingespannt oder von diesem vollständig umgeben. Der Trägerkörper kann beispielsweise eine Platte, eine Scheibe oder ein Rahmen sein. Ist der Trägerkörper ein Rahmen, so kann dieser die Folie beispielsweise durch ein Spritzgussverfahren vorzugsweise vollständig umschließen, wodurch die Folie gegenüber Fremdkörper und sonstigen Einflüssen zuverlässig geschützt werden kann. Dazu besteht der Trägerkörper vorzugsweise aus einen spritzfähigen kunststoffhaltigen Material. Mit Blick auf die anderen Ausgestaltungsmöglichkeiten können der Körper und/oder der Trägerkörper bevorzugt aus Glas, Kunststoff oder aus Metall bestehen. Der Körper und/oder der Trägerkörper bestehen vorzugsweise aus einem lichtdurchlässigen Material. In diesem Fall sind an, auf oder in dem Körper insbesondere der eine oder die mehreren lichtundurchlässigen Bereiche ausgebildet. Alternativ besteht der Körper und/oder der Trägerkörper z.B. aus einem lichtundurchlässigen Material. In diesem Fall sind an oder in dem Körper bzw. dem Trägerkörper insbesondere der eine oder die mehreren lichtdurchlässigen Bereiche ausgebildet. Die lichtundurchlässigen Bereiche können beispielsweise durch Bedrucken des lichtdurchlässigen Körpers mit lichtundurchlässiger Farbe ausgebildet sein. Ferner ist es möglich, die lichtdurchlässigen Bereiche durch Ätzen oder Ausbrechungen in dem lichtundurchlässigen Körper auszubilden. Das Codierelement ist vorzugsweise eben weiter bevorzugt unter Berücksichtigung von Herstellungstoleranzen oder im Wesentlichen eben ausgebildet. Im Sinne der vorliegenden Erfindung fallen unter der Definition "im Wesentlichen" vorzugsweise noch solche abgewandelten bevorzugten Ausführungsformen, welche geringfügige Abwandlungen oder Änderungen, mit anderen Worten eine tolerierbar beeinträchtigende Wirkung im Vergleich zu einer ohne diese Definition näher spezifizierten Ausgestaltung aufweisen. Beispielsweise kann das im Wesentlichen eben ausgestaltete Codierelement im Vergleich zu einem eben ausgestalteten Codierelement, unter welches vorzugsweise im Bereich von Herstellungstoleranzen ausgeformte Ausführungsformen fallen, über die Herstellungstoleranz hinausgehende Erhebungen und/oder Vertiefungen aufweisen, ohne das Codierelement in seiner Funktionsfähigkeit, nämlich des vorbestimmten Durchlassens eines notwendigen Anteils an Lichtstrahlen zur Positionssensierung des mit dem Codierelement gekoppelten Schalthebels zu beeinflussen.

Gemäß einer Weiterbildung umfasst der Lichtleitkörper mehrere Lichteintrittsflächen, wobei an dem Träger mehrere selbstleuchtende Lichtquellen vorgesehen sind, die Licht durch die Lichteintrittsflächen hindurch in den Lichtleitkörper einleiten. Dies ist insbesondere dann sinnvoll, wenn die Lichtaustrittsfläche aufgrund der räumlichen Abmessungen und/oder der Geometrie des Lichtleitkörpers nicht in ausreichendem Maße von Licht durchflutet wird. Die Lichtquellen strahlen insbesondere Licht derselben Wellenlänge ab.

Bevorzugt ist der Schalthebel mit dem Codierelement verbunden, vorzugsweise mechanisch. Insbesondere steht das Codierelement mit dem Schalthebel in Mitnahmeverbindung. Bevorzugt ist der Träger mit der Halterung verbunden, vorzugsweise fest, insbesondere starr. Der Schalthebel ist zum Beispiel verschiebbar oder schwenkbar an der Halterung gelagert. Insbesondere ist der Schalthebel entlang einer oder entlang wenigstens einer Schaltgasse in die unterschiedlichen Schalthebelstellungen bewegbar. Sind mehrere Schaltgassen vorgesehen, sind diese bevorzugt durch eine Wählgasse miteinander verbunden.

Gemäß einer Ausgestaltung sind die Sensoren elektrisch mit einer Auswerteeinrichtung verbunden. Vorteilhaft ist das oder ein Fahrzeuggetriebe mittels der Auswerteeinrichtung ansteuerbar. Insbesondere ist die Auswerteeinrichtung mit dem Fahrzeuggetriebe gekoppelt.

Die Erfindung wird nachfolgend anhand einer bevorzugten Ausführungsform unter Bezugnahme auf die Zeichnung beschrieben. In der Zeichnung zeigen:
- Fig. 1: eine schematische Ansicht einer Schalthebelvorrichtung gemäß einer Ausführungsform,
- Fig. 2: eine Schnittansicht der aus Fig. 1 ersichtlichen Schalthebelstellungserfassungseinrichtung,
- Fig. 3: eine Schnittansicht der Schalthebelstellungserfassungseinrichtung entlang der aus Fig. 2 ersichtlichen Schnittlinie B-B,
- Fig. 4: eine schematische Schnittansicht einer Schalthebelstellungserfassungseinrichtung gemäß einer weiteren Ausführungsform, und
- Fig. 5: eine schematische Draufsicht auf die Codierplatte in der Schalthebelstellung P.

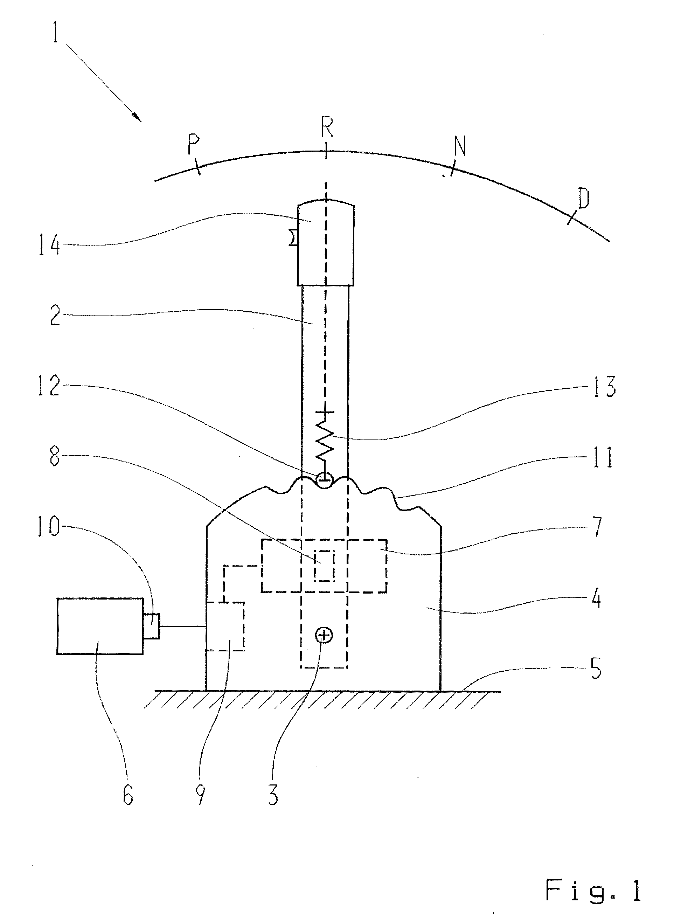

Aus Fig. 1 ist eine Schalthebelvorrichtung 1 gemäß einer Ausführungsform ersichtlich, wobei ein Schalthebel 2 um eine Schaltachse 3 schwenkbar an einer Halterung 4 gelagert ist, die fest in einem Fahrzeug 5 montiert ist, welches ein Fahrzeuggetriebe 6 umfasst. Der Schalthebel 2 kann um die Schaltachse 3 in vorgegebene Schalthebelstellungen P, R, N und D geschwenkt werden. An der Halterung 4 ist eine Schalthebelstellungserfassungseinrichtung 7 vorgesehen, mittels welcher die aktuelle Schalthebelstellung des Schalthebels 2 erfassbar ist. Die Schalthebelstellungserfassungseinrichtung 7 weist eine Sensoranordnung 8 auf und ist elektrisch mit einer Auswerteeinrichtung 9 verbunden, die wiederum elektrisch mit einem Getriebesteuergerät 10 des Getriebes 6 verbunden ist. Ferner ist eine Rastiervorrichtung vorgesehen, die eine an der Halterung 4 vorgesehene Rastbahn 11 und ein am Schalthebel 2 vorgesehenes Rastierelement 12 umfasst, welches mittels einer Rastierelementfeder 13 gegen die Rastbahn 11 gespannt ist. An einem freien Ende des Schalthebels 2 ist ein Schaltknauf 14 vorgesehen, der zur manuellen Betätigung des Schalthebels 2 ergriffen werden kann.

Das Getriebe 6 ist ein Automatikgetriebe, sodass der Schalthebeistellung P eine Parkstellung zugeordnet ist, in der wenigstens eine Bremse des Fahrzeugs 5 betätigt ist. Der Schalthebelstellung R ist ein Rückwärtsgang des Getriebes 6 zugeordnet, und der Schalthebelstellung N ist ein Leerlauf des Getriebes 6 zugeordnet. Die Schalthebelstellung D ist für einen normalen Vorwärtsfahrbetrieb des Fahrzeugs vorgesehen, sodass der Schalthebelstellung D mehrere Vorwärtsgänge des Getriebes 6 zugeordnet sind.

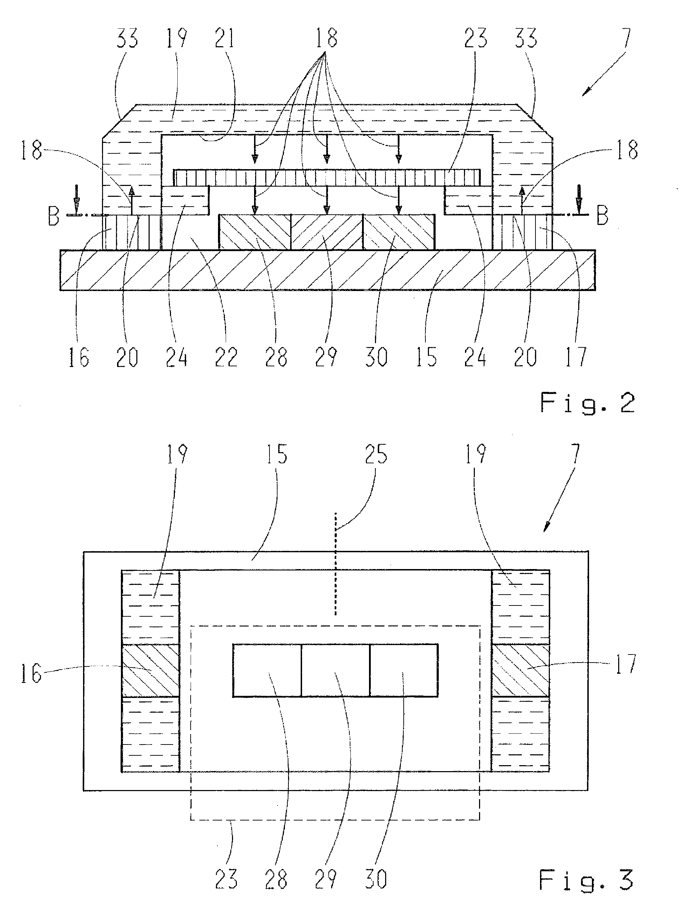

Aus Fig. 2 ist eine Schnittansicht der Schalthebelstellungserfassungseinrichtung 7 ersichtlich, wobei die Sensoranordnung 8 mehrere optische Sensoren 28, 29 und 30 umfasst, die auf einer Leiterplatte 15 angeordnet sind. Ferner sind zwei Leuchtdioden 16 und 17 auf der Leiterplatte 15 angeordnet, die Licht 18 in einen Lichtleitkörper 19 einleiten, der an der Leiterplatte 15 befestigt ist. Das Licht 18 wird durch Lichteintrittsflächen 20 in den Lichtleitkörper 19 eingeleitet, in diesem über einen angefasten bzw. abgeschrägten Eckbereich 33 umgelenkt und durch eine Lichtaustrittsfläche 21 von dem Lichtleitkörper 19 abgegeben. Der Lichtleitkörper 19 umfasst einen Innenraum 22, der zu der Leiterplatte 15 hin offen und von dieser abgedeckt ist. Ferner ist die Lichtaustrittsfläche 21 durch eine den Innenraum 22 begrenzende und der Leiterplatte 15 gegenüberliegende Oberfläche des Lichtleitkörpers 19 gebildet, sodass auch die in dem Innenraum 22 angeordneten Sensoren 28, 29 und 30 der Lichtaustrittsfläche 21 gegenüberliegen. In einem alternativen, nicht gezeigtem Ausführungsbeispiel sind die Sensoren 28, 29,30 unterhalb der Leiterplatte 15, mit anderen Worten auf einer der Lichtleitkörper 19 abgewandten Seite der Leiterplatte 15 angeordnet. Die Leiterplatte 15 ist dabei wenigstens im Anordnungsbereich der Sensoren 28, 29, 30 lichtdurchlässig vorgesehen.

Das in den Lichtleitkörper 19 eingeleitete Licht 18 wird durch die Lichtaustrittsfläche 21 in Richtung auf die Sensoren 28, 29 und 30 in den Innenraum 22 abgegeben. Ferner ist zwischen der Lichtaustrittsfläche 21 und den Sensoren 28, 29 und 30 in dem Innenraum 22 eine Codierplatte 23 angeordnet, die verschiebbar an dem Lichtleitkörper 19 gelagert ist, welcher dafür Lagerstätten 24 aufweist.

Aus Fig. 3 ist eine Schnittansicht der Schalthebelstellungserfassungseinrichtung 7 entlang der aus Fig. 2 ersichtlichen Schnittlinie B-B ersichtlich, wobei die Position der Codierplatte 23 schematisch durch eine gestrichelte Umrisslinie dargestellt ist. Die mechanisch mit dem Schalthebel 2 gekoppelte Codierplatte 23 ist durch Schwenken des Schalthebels 2 um die Schaltachse 3 entlang der Geraden 25 bewegbar. Gemäß dieser Ausführungsform besitzt die Codierplatte 23 insbesondere einen einzigen translatorischen Freiheitsgrad.

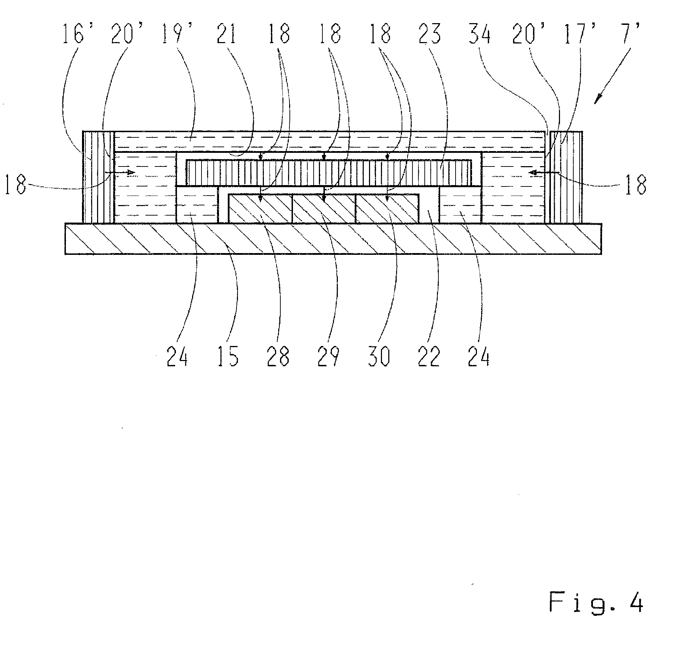

Fig. 4 zeigt eine schematische Schnittansicht einer Schalthebelstellungserfassungseinrichtung 7' gemäß einer weiteren bevorzugten Ausführungsform. Gleiche Bezugszeichen betreffen dabei Bauteile mit gleicher Wirkung, wobei mit Apostroph versehende Bezugszeichen entsprechend abgewandelte Bauteile kennzeichnen. Die Schalthebelstellungserfassungseinrichtung 7' unterscheidet sich von der mit den Figuren 2 und 3 gezeigten Schalthebelstellungserfassungseinrichtung 7 nur durch die Anordnung der Leuchtdioden 16', 17' und der Ausgestaltung des Lichtleitkörpers 19'. Im Einzelnen sind die Leuchtdioden 16', 17' seitlich an dem Lichtleitkörper 19' angeordnet und erstrecken sich über die gesamte Lichteintrittsfläche 20'. Die in der Fig. 4 gezeigte linke Leuchtdiode 16' liegt unmittelbar an der zugeordneten Lichteintrittsfläche 20' an, während die andere Leuchtdiode 17'der zugeordneten Lichteintrittsfläche 20' mit einem dazwischenliegenden Spalt 34 gegenüberliegend angeordnet ist. Diese Darstellung ist beispielhaft für die Anordnungsmöglichkeiten der die bevorzugten Ausführungsbeispiele betreffenden Leuchtdioden 16, 17, 16', 17'. Wie in der Fig. 2 gezeigt, können alternativ beide Leuchtdioden 16, 17 unmittelbar an der jeweilig zugeordneten Lichteintrittsfläche 20 anliegen oder weiterhin alternativ zu der jeweilig zugeordneten Lichteintrittsfläche 20' mit einem dazwischenliegenden Spalt 34 beabstandet sein. Des Weiteren ist es nicht zwingend erforderlich, dass sich die jeweiligen Leuchtdioden 16', 17' vollständig über die jeweilige Seite des Lichtleitkörpers 19' erstrecken. Die Größe der Leuchtdioden 16', 17' kann der notwendigen Lichtintensität zur Positionserkennung des mit der Codierplatte 23 gekoppelten Schalthebels 2 bedarfsgerecht angepasst sein. So kann beispielsweise eine bzw. können bis zu alle Leuchtdioden 16', 17' kleiner als eine jeweilig zugeordnete Fläche des Lichtleitkörpers 19', welche wenigstens eine Lichteintrittsfläche 20' umfasst, ausgebildet sein.

Mit der mit Fig. 4 gezeigten bevorzugten Ausführungsform lässt sich eine in Anordnungsrichtung von der Leiterplatte 15 über die Sensoren 28, 29, 30 und der Codierplatte 23 bis zu dem Lichtleitkörper 19' verlaufende kompaktere Schalthebelstellungserfassungseinrichtung 7' bereitstellen.

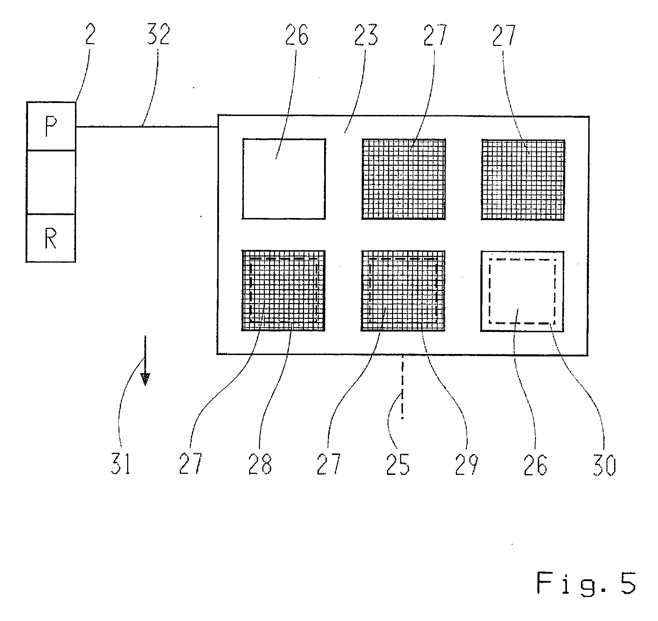

Aus Fig. 5 ist eine schematische Draufsicht auf die Codierplatte 23 ersichtlich, die mehrere lichtdurchlässige Bereiche 26 und mehrere lichtundurchlässige Bereiche 27 umfasst. Gemäß Fig. 3 ist der Schalthebel 2 in die Schalthebelstellung P gestellt, wobei die Sensoren 28 und 29 jeweils von einem der lichtundurchlässigen Bereiche 27 abgedeckt sind und somit kein Licht empfangen können. Der Sensor 30 empfängt hingegen Licht durch einen der lichtdurchlässigen Bereiche 26. Wird ein unbeleuchteter Zustand eines Sensors mit "0" und ein beleuchteter Zustand eines Sensors mit "1" bezeichnet, so kann den Sensoren 28, 29 und 30 in dieser Reihenfolge der Zustand {001} zugeordnet werden. Wird der Schalthebel 2 von der Schalthebelstellung P in Richtung des Pfeils 31 in die Schalthebelstellung R überführt, nimmt er die Codierplatte 23 mit, da diese über ein mechanisches Koppelglied 32 mit dem Schalthebel 2 in Mitnahmeverbindung steht. In der Schalthebelstellung R ist den Sensoren 28, 29 und 30 in dieser Reihenfolge der Zustand {100} zugeordnet. Die Bereiche 26 und 27 bilden somit eine optische Codierung der Codierplatte 23, wobei die Hamming-Distanz zwischen den beiden Schalthebelstellungen P und R gleich zwei ist. Mit einer Hamming-Distanz von zwei lässt sich erkennen, wenn genau einer der Sensoren ausgefallen ist. Bevorzugt beträgt die Hamming-Distanz aber vier oder wenigstens vier, sodass auch der Ausfall von zwei Sensoren erkennbar ist. Ferner ist es möglich, einen Fehler zu korrigieren, wenn lediglich einer der Sensoren ausgefallen ist. Auch besteht eine Möglichkeit zur Überprüfung einer oder mehrerer der Sensoren darin, dass die Lichtquelle, welche hier die Leuchtdioden 16 und 17 umfasst, ausgeschaltet wird. In diesem Fall muss der oder jeder der Sensoren in den Zustand "0" übergehen, der mit einem der lichtdurchlässigen Bereiche 26 zur Überdeckung gebracht ist. Die vorbeschriebene Funktionsweise der mit der Fig. 3 gezeigten Schalthebelstellungserfassungseinrichtung 7 gilt entsprechend für die mit Fig. 4 gezeigte weitere bevorzugte Schalthebelstellungserfassungseinrichtung 7'.

Auch kann eine Überprüfung der Funktionsfähigkeit mindestens einer der Sensoren 28, 29, 30 mittels einer getakteten Anregung der Leuchtdioden 16, 17 erfolgen. Die jeweilig zugeordneten Sensoren 28, 29, 30 werden dabei einen dem jeweiligen getakteten Zustand der Leuchtdiode 16, 17 entsprechenden Zustand einnehmen. Ferner lässt sich aus einer Differenzbildung von unterschiedlichen Zuständen bestimmen, ob der Sensor 28, 29, 30 aktiviert oder deaktiviert ist. Die Differenzbildung erlaubt dabei eine Berücksichtigung eines Dunkelstromanteils der Sensoren 28, 29, 30. Üblicherweise tritt Dunkelstrom bei Bauelementen auf, welche einen inneren photoelektrischen Effekt verwenden. Mittels der Differenzbildung kann des Weiteren eine elektrische Sensierung in Abhängigkeit vom Zustand der Leuchtdioden erfolgen.

### Bezugszeichen

- 1: Schalthebelvorrichtung
- 2: Schalthebel
- 3: Schaltachse
- 4: Halterung
- 5: Fahrzeug
- 6: Fahrzeuggetriebe
- 7, 7': Schalthebelstellungserfassungseinrichtung
- 8: Sensoranordnung
- 9: Auswerteeinrichtung
- 10: Getriebesteuergerät
- 11: Rastbahn
- 12: Rastierelement
- 13: Feder
- 14: Schaltknauf
- 15: Leiterplatte
- 16, 16': Leuchtdiode
- 17, 17': Leuchtdiode
- 18: Licht
- 19, 19': Lichtleitkörper
- 20, 20': Lichteintrittsfläche des Lichtleitkörpers
- 21: Lichtaustrittsfläche des Lichtleitkörpers
- 22: Innenraum des Lichtleitkörpers
- 23: Codierplatte
- 24: Lagerstätte
- 25: Gerade
- 26: lichtdurchlässiger Bereich
- 27: lichtundurchlässiger Bereich
- 28: optischer Sensor
- 29: optischer Sensor
- 30: optischer Sensor
- 31: Pfeil
- 32: Koppelglied
- 33: Eckbereich
- 34: Spalt

## Patentansprüche

1. Schalthebelvorrichtung zur Betätigung eines Fahrzeuggetriebes, mit einer Halterung (4), einem bewegbar an der Halterung (4) gelagerten und in vorgegebene Schalthebelstellungen (P, R, N, D) stellbaren Schalthebel (2) und einer optischen Schalthebelstellungserfassungseinrichtung (7; 7'), die einen Träger (15), mehrere an dem Träger (15) vorgesehene optische Sensoren (28, 29, 30), ein optisches Umlenkelement, wenigstens eine an dem Träger (15) vorgesehene selbstleuchtende Lichtquelle (16, 17; 16', 17'), mittels welcher Licht (18) über das Umlenkelement an die Sensoren (28, 29, 30) abgebbar ist, und ein in den Strahlengang des Lichts (18) angeordnetes und mit einer optischen Codierung versehenes Codierelement (23) aufweist, welches durch Bewegen des Schalthebels (2) in vorgegebene Codierstellungen bewegbar ist, **dadurch gekennzeichnet, dass** das Codierelement (23) zwischen den Sensoren (28, 29, 30) und dem an dem Träger (15) vorgesehenen und als Lichtleitkörper (19; 19') ausgebildeten Umlenkelement angeordnet ist, und dass der Lichtleitkörper (19; 19') einen zu dem Träger (15) hin offenen Innenraum (22) umfasst, der von dem Träger (15) abgedeckt ist, wobei das Codierelement (23) und die Sensoren (28, 29, 30) in dem Innenraum (22) angeordnet sind.

2. Schalthebelvorrichtung nach Anspruch 1, **dadurch gekennzeichnet, dass** der Lichtleitkörper (19; 19') eine Lichtaustrittsfläche (21) und wenigstens eine Lichteintrittsfläche (20; 20') aufweist, durch welche hindurch die selbstleuchtende Lichtquelle (16, 17; 16', 17') das Licht (18) in den Lichtleitkörper (19; 19') einleitet, der das eingeleitete Licht (18) umleitet und durch die Lichtaustrittsfläche (21) in Richtung auf das Codierelement (23) abgibt, welches zwischen der Lichtaustrittsfläche (21) und den Sensoren (28, 29, 30) angeordnet ist.

3. Schalthebelvorrichtung einem der vorangehenden Ansprüche, **dadurch gekennzeichnet, dass** das Codierelement (23) relativ zu den Sensoren (28, 29, 30) entlang einer Geraden (25) in die oder in mehrere der Codierstellungen bewegbar ist.

4. Schalthebelvorrichtung nach einem der vorangehenden Ansprüche,
**dadurch gekennzeichnet, dass** das Codierelement (23) ein oder zwei translatorische Freiheitsgrade besitzt.

5. Schalthebelvorrichtung nach einem der vorangehenden Ansprüche,
**dadurch gekennzeichnet, dass** das Codierelement (23) verschiebbar an dem Lichtleitkörper (19; 19') gelagert ist.

6. Schalthebelvorrichtung nach einem der vorangehenden Ansprüche,
**dadurch gekennzeichnet, dass** die optische Codierung einen oder mehrere lichtdurchlässige Bereiche (26) und einen oder mehrere lichtundurchlässige Bereiche (27) umfasst, wobei jeder der Bereiche (26, 27) in wenigstens einer der Codierstellungen mit zumindest einem der Sensoren (28, 29, 30) zur Überdeckung gebracht werden kann.

7. Schalthebelvorrichtung nach einem der vorangehenden Ansprüche,
**dadurch gekennzeichnet, dass** die Codierung zwischen zwei benachbarten der Codierstellungen eine Hamming-Distanz von wenigstens vier aufweist.

8. Schalthebelvorrichtung nach einem der vorangehenden Ansprüche,
**dadurch gekennzeichnet, dass** der Schalthebel (2) mit dem Codierelement (23) und die Halterung (4) mit dem Träger (15) verbunden ist.

9. Schalthebelvorrichtung nach einem der vorangehenden Ansprüche,
**dadurch gekennzeichnet, dass** die Sensoren (28, 29, 30) elektrisch mit einer Auswerteeinrichtung (9) verbunden sind, mittels welcher ein Fahrzeuggetriebe (6) ansteuerbar ist.

10. Schalthebelvorrichtung nach einem der vorangehenden Ansprüche,
**dadurch gekennzeichnet, dass** die selbstleuchtende Lichtquelle (16, 17; 16', 17') getaktet ansteuerbar ist.

## Claims

1. Shift lever device for actuating a vehicle gearbox, having a mount (4), a shift lever (2) which is movably mounted on the mount (4) and can be placed in predefined shift lever positions (P, R, N, D) and an optical shift lever position-detection device (7; 7') which has a carrier (15), a plurality of optical sensors (28, 29, 30) which are provided on the carrier (15), an optical deflection element, at least one self-illuminating light source (16, 17; 16', 17') which is provided on the carrier (15) and by means of which light (18) can be output to the sensors (28, 29, 30)via the deflection element, and a coding element (23) which is arranged in the beam path of the light (18), is provided with an optical coding and can be moved into predefined coding positions by moving the shift lever (2), **characterized in that** the coding element (23) is arranged between the sensors (28, 29, 30) and the deflection element which is provided on the carrier (15) and is embodied as a lightguide body (19; 19'), and **in that** the lightguide body (19; 19') comprises an interior space (22) which is open towards the carrier (15) and is covered by the carrier (15), wherein the coding element (23) and the sensors (28, 29, 30) are arranged in the interior space (22).

2. Shift lever device according to Claim 1, **characterized in that** the lightguide body (19; 19') has a light exit face (21) and at least one light entry face (20; 20') through which the self-illuminating light source (16, 17; 16', 17') inputs the light (18) into the lightguide body (19; 19') which diverts the input light (18) and outputs said light (18) through the light exit face (21) in the direction of the coding element (23) which is arranged between the light exit face (21) and the sensors (28, 29, 30).

3. Shift lever device according to one of the preceding claims, **characterized in that** the coding element (23) can be moved relative to the sensors (28, 29, 30) into the coding position, or into a plurality of the coding positions, along a straight line (25).

4. Shift lever device according to one of the preceding claims, **characterized in that** the coding element (23) has one or two translatory degrees of freedom.

5. Shift lever device according to one of the preceding claims, **characterized in that** the coding element (23) is mounted so as to be displaceable on the lightguide body (19; 19').

6. Shift lever device according to one of the preceding claims, **characterized in that** the optical coding comprises one or more translucent regions (26) and one or more opaque regions (27), wherein each of the regions (26, 27) can be made to overlap with at least one of the sensors (28, 29, 30) in at least one of the coding positions.

7. Shift lever device according to one of the preceding claims, **characterized in that** the coding has a hamming distance of at least four between two adjacent coding positions.

8. Shift lever device according to one of the preceding claims, **characterized in that** the shift lever (2) is connected to the coding element (23), and the mount (4) is connected to the carrier (15).

9. Shift lever device according to one of the preceding claims, **characterized in that** the sensors (28, 29, 30) are electrically connected to an evaluation device (9) by means of which a vehicle gearbox (6) can be actuated.

10. Shift lever device according to one of the preceding claims, **characterized in that** the self-illuminating light source (16, 17; 16', 17') can be actuated in a clocked fashion.

## Revendications

1. Dispositif de levier de changement de vitesse servant à actionner une boîte de vitesses de véhicule, comprenant un support (4), un levier de changement de vitesse (2) monté mobile sur le support (4) et pouvant être amené dans des positions de levier de changement de vitesse (P, R, N, D) prédéterminées, et un appareil de détection de position de levier de changement de vitesse (7 ; 7'), lequel possède un élément porteur (15), plusieurs capteurs optiques (28, 29, 30) présents sur l'élément porteur (15), un élément de renvoi optique, au moins une source de lumière autolumineuse (16, 17 ; 16', 17') présente sur l'élément porteur (15), par l'intermédiaire de laquelle de la lumière (18) peut être délivrée aux capteurs (28, 29, 30) par le biais de l'élément de renvoi, et un élément de codage (23) disposé dans le trajet du rayon de la lumière (18) et pourvu d'un codage optique, lequel peut être déplacé dans des positions de codage prédéfinies par un mouvement du levier de changement de vitesse (2), **caractérisé en ce que** l'élément de codage (23) est disposé entre les capteurs (28, 29, 30) et l'élément de renvoi présent sur l'élément porteur (15) et réalisé sous la forme d'un corps de guidage de lumière (19 ; 19'), et **en ce que** le corps de guidage de lumière (19 ; 19') comprend un espace intérieur (22) ouvert en direction de l'élément porteur (15), lequel est recouvert par l'élément porteur (15), l'élément de codage (23) et les capteurs (28, 29, 30) étant disposés dans l'espace intérieur (22).

2. Dispositif de levier de changement de vitesse selon la revendication 1, **caractérisé en ce que** le corps de guidage de lumière (19 ; 19') possède une surface de sortie de lumière (21) et au moins une surface d'entrée de lumière (20 ; 20'), à travers laquelle la source de lumière autolumineuse (16, 17 ; 16', 17') injecte la lumière (18) dans le corps de guidage de lumière (19 ; 19'), lequel dévie la lumière (18) injectée et la délivre à travers la surface de sortie de lumière (21) en direction de l'élément de codage (23) qui est disposé entre la surface de sortie de lumière (21) et les capteurs (28, 29, 30).

3. Dispositif de levier de changement de vitesse selon l'une des revendications précédentes, **caractérisé en ce que** l'élément de codage (23) peut être déplacé par rapport aux capteurs (28, 29, 30) le long d'une droite (25) dans la ou dans plusieurs des positions de codage.

4. Dispositif de levier de changement de vitesse selon l'une des revendications précédentes, **caractérisé en ce que** l'élément de codage (23) possède un ou deux degrés de liberté de translation.

5. Dispositif de levier de changement de vitesse selon l'une des revendications précédentes, **caractérisé en ce que** l'élément de codage (23) est monté coulissant sur le corps de guidage de lumière (19 ; 19').

6. Dispositif de levier de changement de vitesse selon l'une des revendications précédentes, **caractérisé en ce que** le codage optique comprend une ou plusieurs zones transparentes (26) et une ou plusieurs zones opaques (27), chacune des zones (26, 27) pouvant être amenée dans au moins l'une des positions de codage en vue de recouvrir au moins l'un des capteurs (28, 29, 30).

7. Dispositif de levier de changement de vitesse selon l'une des revendications précédentes, **caractérisé en ce que** le codage entre deux positions de codage possède une distance de Hamming au moins égale à quatre.

8. Dispositif de levier de changement de vitesse selon l'une des revendications précédentes, **caractérisé en ce que** le levier de changement de vitesse (2) avec l'élément de codage (23) et le support (4) est relié à l'élément porteur (15).

9. Dispositif de levier de changement de vitesse selon l'une des revendications précédentes, **caractérisé en ce que** les capteurs (28, 29, 30) sont reliés électriquement à un appareil d'interprétation (9) par l'intermédiaire duquel peut être commandée une boîte de vitesses de véhicule (6).

10. Dispositif de levier de changement de vitesse selon l'une des revendications précédentes, **caractérisé en ce que** la source de lumière autolumineuse (16, 17 ; 16', 17') peut être commandée de manière cyclique.
